Europäisches Patentamt

European Patent Office

Office européen des brevets

(11) Veröffentlichungsnummer: **0 331 202 B1**

(19)

# EUROPÄISCHE PATENTSCHRIFT

(12)

(45) Veröffentlichungstag der Patentschrift: **19.11.92**

(51) Int. Cl.[5]: **G06F 12/14**, G06F 1/00

(21) Anmeldenummer: **89103803.6**

(22) Anmeldetag: **03.03.89**

(54) **Verfahren zur bedarfsweisen Benutzung des Datenspeichers eines Mikrocomputers als Programmspeicher.**

(30) Priorität: **04.03.88 DE 3807122**

(43) Veröffentlichungstag der Anmeldung:
**06.09.89 Patentblatt 89/36**

(45) Bekanntmachung des Hinweises auf die
Patenterteilung:
**19.11.92 Patentblatt 92/47**

(84) Benannte Vertragsstaaten:
**AT CH DE ES FR GB IT LI NL**

(56) Entgegenhaltungen:
**US-A- 3 263 218**

**FUNKSCHAU, Nr. 26, 23. Dezember 1983, Seiten 70-71, DE; W. PETERSEN: "Schutz gegen Softwareklau"**

**ELEKTRONIK, Nr. 11, 30. Mai 1986, Seiten 84-90, München, DE; K. LANG et al.: "Firmware vor unbefugtem Zugriff geschützt"**

**CHIP. ZEITSCHRIFT FÜR MIKRO-COMPUTER-TECHNIK, Nr. 11, November 1982, Seiten 190-191, Würzburg, DE; A. STRAUB: "Speicherschutz für Mikrocomputer"**

(73) Patentinhaber: **SIEMENS AKTIENGESELL-SCHAFT**
**Wittelsbacherplatz 2**
**W-8000 München 2(DE)**

(72) Erfinder: **Schrenk, Hartmut, Dr.**
**Fasanenweg 22**
**W-8013 Haar(DE)**
Erfinder: **Viehmann, Hans-Heinrich, Ing. grad.**
**Hippelstrasse 26a**
**W-8000 München 82(DE)**

## Beschreibung

Die Erfindung betrifft ein Verfahren zur anwenderspezifischen Nutzung des in einem Mikrocomputer enthaltenen elektrisch programmierbaren Speichers, wobei mindestens ein Teilbereich dieses elektrisch programmierbaren Speichers als Programmspeicher beschreibbar ist.

Ein Mikrocomputer enthält üblicherweise eine CPU (Zentraleinheit), einen meist maskenprogrammierten (ROM) Programmspeicher, einen elektrisch programmierbaren Speicher, der als flüchtiger (RAM) oder nichtflüchtiger (E-PROM, EE-PROM) Speicher ausgeführt sein kann und einen Datenbus, der diese Komponenten miteinander und mit weiteren Komponenten verbindet. Unter der CPU od. Zentraleinheit eines Mikrocomputers versteht man das Rechenwerk und Steuerwerk, das u.a. einen Befehlszähler (Program Counter) enthält, ein Register, das bei Programmabläufen die Speicheradressen der jeweils zu bearbeitenden Bits angibt. Eine Beschreibung des Aufbaus und der Funktionsweise von Mikrocomputern sowie Erläuterungen der üblichen Fachausdrücke können dem Siemens-Fachbuch "Mikroprozessoren und Mikrocomputer" von H.-P. Blomeyer-Bartenstein entnommen werden.

Ein maskenprogrammierter Programmspeicher bietet bezüglich nachträglicher Manipulation des Anwendungsprogrammes größtmögliche Sicherheit. Sollten jedoch, insbesondere bei einem Ein-Chip-Mikrocomputer des gleichen Types unterschiedliche, anwendungsspezifische Programme in dem Programmspeicher des den jeweiligen Anforderungen entsprechenden Mikrocomputers geschrieben werden, so legt der Anwendungsfall mit dem größten Programmspeicherbedarf die vorzusehende Chip-Fläche bzw. den Speicherumfang des maskenprogrammierbaren Programmspeichers fest. In Anwendungsfällen, für die nur ein Bruchteil dieses zur Verfügung stehenden Programmspeichers mit einem Applikationsprogramm belegt ist, ist der restliche Speicherbereich ungenützt. Ein weiterer Nachteil eines maskenprogrammierbaren Programmspeichers ist der relativ hohe Aufwand, der zur Programmierung erforderlich ist und in Anwendungsfällen mit geringer Stückzahl in keinem Verhältnis zum Nutzen steht. Eine sinnvolle Alternative zu einem reinen maskenprogrammierten Programmspeicher ist das Ablegen von Unterprogrammen in einen maskenprogrammierten Speicher und das Ablegen übergeordneter Programme in einen elektrisch programmierbaren Speicher, der auch als Programmspeicher genutzt werden kann. Wenn der betreffende Mikrocomputer eine mikroprogrammfähige CPU enthält, kann beispielsweise auch das Mikroprogramm zumindest größten Teils maskenprogrammiert gespeichert werden.

In manchen Anwendungsfällen wäre es von Vorteil, Hilfsprogramme in den Programmspeicher einzugeben, die den Testablauf während der Fertigung vereinfachen. Diese Hilfsprogramme sind allerdings nach Abschluß des Tests überflüssig, so daß der Speicherplatz, in dem sie eingeschrieben sind, durch andere Programme belegbar ist, oder als Datenspeicher eingesetzt werden könnte. Es besteht die Möglichkeit, als Programmspeicher einen elektrisch programmierbaren Speicher zu verwenden oder zumindest für Hilfsprogramme oder für anwenderspezifische Teilbereiche des jeweiligen Applikationsprogrammes einen solchen Speicher vorzusehen. Wenn hierzu ein elektrisch löschbarer Speicher vom EE-PROM-Typ eingesetzt wird, kann der das Hilfsprogramm enthaltende Speicherbereich sogar nach Ablauf der Testphase gelöscht werden und als Datenspeicher genutzt werden. Außerdem steht dann bei kleinen Applikationsprogrammen ein entsprechend größerer Datenspeicher zur Verfügung.

In dem Artikel "Intelligenz auf Plastik, Sicherheitssysteme mit Chip-Carrying Cards" von H. Lambert und M. Schmötzer, der in der Zeitschrift Elektronik vom 03.10.1986 veröffentlicht worden ist, wird auf Seite 66 ein Mikrocomputer beschrieben, der neben einer CPU, einem als Notizblockspeicher eingesetzten flüchtigen Speicher, einem Datenbus, einer Schutzschaltung und einer Ein-/Ausgabeschaltung auch einen maskenprogrammierbaren Programmspeicher zur Aufnahme des Applikationsprogrammes und einen elektrisch programmierbaren Speicher enthält. Hierbei können auch im elektrisch programmierbaren Speicher lauffähige Programme abgespeichert werden. Da jeder Datentransfer, wie üblich, unter Kontrolle der CPU erfolgt, ist zwar der Betrieb externer Programme weitgehend ausgeschlossen, jedoch ist die Schaltung nicht gegen in den Speicher eingeschriebene Programme geschützt, weil der gesamte elektrisch programmierbare Speicher zum Speichern lauffähiger Programme vorgesehen ist.

Ein elektrisch veränderbarer Programmspeicher birgt allerdings, insbesondere beim Einsatz in im obengenannten Artikel beschriebenen "Chip-Carrying Cards", das Risiko, daß ein Betrüger ein eigenes Programm im Programmspeicher ablegt und durch den Betrieb des Mikrocomputers mit diesem Programm unerlaubte Manipulationen oder Analysen durchführt.

Um ein nachträgliches Abändern des endgültig abgespeicherten Programmes auch in einem EE-PROM-Speicher zu unterbinden, kann der entsprechende Speicherbereich beispielsweise durch Setzen einer Schreibsperre blockiert werden. Solche Schreibsperren sind bekannt und unter anderem in der EP-A-0 123 177 beschrieben.

Aufgabe der Erfindung ist die Bereitstellung eines Verfahrens zum eingeschränkten Betreiben eines elektrisch programmierbaren Speichers als Programmspeicher eines Mikrocomputers.

Diese Aufgabe wird durch ein Verfahren nach dem kennzeichnenden Teil des Patentanspruches 1 gelöst.

Günstige Verfahrensvarianten sind Grundlage von Unteransprüchen.

Erfindungsgemäß ist bei Mikrocomputern mit als Programmspeicher benutzbarem elektrisch programmierbarem Speicher vorgesehen, die Möglichkeit der Benutzung als Programmspeicher für einen bestimmten Adreßbereich des elektrisch programmierbaren Speichers, insbesondere für den gesamten elektrisch programmierbaren Speicher, für alle weiteren Anwendungen zu unterbinden. Es ist außerdem erfindungsgemäß, daß dieses Unterbinden der Programmspeicherfähigkeit nicht im Produktionsprozeß des Mikrocomputers, sondern insbesondere jederzeit nach Fertigstellung des Mikrocomputers durchgeführt werden kann.

Ob ein Bereich des elektrisch programmierbaren Speichers 1 mit bestimmten Adressen als Programmspeicher benutzt werden kann oder nicht, kann hierbei insbesondere von einer in einem nichtflüchtigen Speicher abgelegten Sperrdateninformation abhängen.

Zum Unterbinden des Ausführens von Programmen aus einem bestimmten Adreßbereich des elektrisch programmierbaren Speichers kann insbesondere eine vorzugsweise jederzeit aktivierbare Blockiereinrichtung 4 vorgesehen sein, die auf den Befehlszähler 3a der CPU 3 zugreift. Ein Befehlszähler 3a ist üblicherweise mit Adreßausgängen an die Adreßleitungen des BUS-Systems 6 angeschlossen.

Eine einfache Ausführungsform einer Blockiereinrichtung 4, mit deren Hilfe das Ausführen von Programmen, die in bestimmten Adreßbereichen des elektrisch programmierbaren Speichers 1 abgelegt sind, unterbunden werden kann, ist dadurch gegeben, daß eine bestimmte Anzahl von Adreßausgängen des Befehlszählers 3a auf ein entsprechendes festes Potential gelegt wird und somit die dem anderen logischen Zustand dieser Adreßleitung entsprechenden Adressen nicht als Bestandteil eines Programmes angewählt werden können. Ist beispielsweise der das höchstwertige Adreßbit darstellende Adreßausgang des Befehlszählers 3a auf ein festes Potential gelegt, so kann als Programmspeicher in Abhängigkeit vom logischen Zustand dieses festen Adreßbitpotentials nur die Hälfte des Speichers mit den höchsten Adreßwerten oder die Hälfte des Speichers mit den niedrigsten Adreßwerten benutzt werden.

Eine andere Möglichkeit, den Ablauf von Programmen aus einem bestimmten, weitgehend gezielt auswählbaren Adreßbereich des elektrisch programmierbaren Speichers, insbesondere durch eine auf den Befehlszähler 3a der CPU 3 eingreifende Blockiereinrichtung zu unterbinden, ist bei Mikrocomputern mit mikroprogrammfähiger CPU durch ein entsprechendes Mikroprogramm gegeben, das nur bestimmte Adressen am Ausgang des Befehlszählers 3a zuläßt.

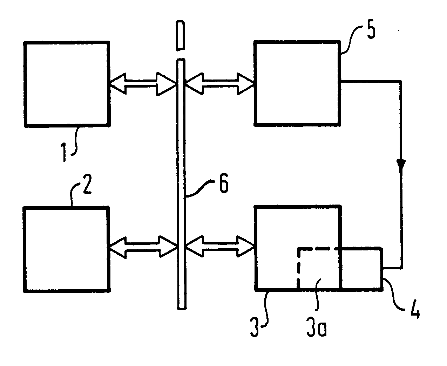

Nachstehend wird anhand der Figur ein möglicher Ablauf eines erfindungsgemäßen Verfahrens dargelegt. Die Figur zeigt im Blockschaltbild als Teil eines Mikrocomputers einen elektrisch programmierbaren Speicher 1, der insbesondere ein nichtflüchtiger Speicher sein kann, einen maskenprogrammierten Speicher 2, eine CPU 3 mit einem Befehlszähler 3a, einer auf den Befehlszähler zugreifende Blockiereinrichtung 4, ein Sperr-Flip-Flop 5 und ein BUS-System 6.

Vorzugsweise wird nach dem Einschalten des Mikrocomputers ein insbesondere im maskenprogrammierten Speicher abgelegtes Kontrollprogramm durchgeführt, das in Abhängigkeit von einer insbesondere im nichtflüchtigen Speicher abgelegten Sperrdateninformation vorzugsweise über ein Sperr-Flip-Flop 5 eine Blockiereinrichtung aktiviert bzw. nicht aktiviert. Diese Blockiereinrichtung beschränkt im aktivierten Zustand die Anzahl der vom Befehlszähler ausgebbaren Adressen, beispielsweise durch Klemmen bestimmter Adreßausgänge des Befehlszählers auf ein festes Potential. Erst nach erfolgreichem Ablauf des Kontrollprogrammes wird eine Benutzung des Mikrocomputers durch die CPU ermöglicht.

Es ist vorgesehen, einen elektrisch programmierbaren Speicher in Bereiche aufzuteilen, wobei ein Speicherbereich als reiner Datenspeicher benutzt werden kann, der andere Speicherbereich jedoch auch als Programmspeicher vorgesehen ist. Hierbei kann es erstrebenswert sein, den als Programmspeicher vorgesehenen Speicherbereich, nachdem das gewünschte Programm gespeichert ist, vor nachträglichen Manipulationen zu schützen. Deshalb ist es in Weiterbildung der Erfindung von Vorteil, an dem elektrisch progammierbaren Speicher 1 in bekannter Weise eine Schreibsperre vorzusehen, die nach dem Abspeichern des gewünschten Programmes aktiviert wird und somit ein nachträgliches Einbringen von Programmen verhindert.

**Patentansprüche**

1. Verfahren zum Betreiben eines elektrisch programmierbaren Speichers (1) als Programmspeicher eines Mikrocomputers mit einer CPU (3) mit Befehlszähler (3a),
   **dadurch gekennzeichnet,** daß das Ausführen von im elektrisch programmierbaren Speicher (1) gespeicherten Programmen für einen bestimmten Adressbereich des elektrisch programmierbaren Speichers (1) jederzeit für alle späteren Anwendungsfälle unterbindbar ist, indem eine Blockiereinrichtung (4) aktiviert wird, die eine Ausgabe der Adressen dieses Adressbereiches durch den Befehlszähler (3a) der CPU (3) unterbindet.

2. Verfahren nach Anspruch 1,
**dadurch gekennzeichnet,** daß das Ausführen von im elektrisch programmierbaren Speicher (1) gespeicherten Programmen für einen frei wählbaren Adressbereich des elektrisch programmierbaren Speichers (1) für alle späteren Anwendungsfälle unterbindbar ist.

3. Verfahren nach Anspruch 1 oder 2,
**dadurch gekennzeichnet,** daß das Ausführen von im elektrisch programmierbaren Speicher (1) gespeicherten Programmen für bestimmte Adressbereiche des elektrisch programmierbaren Speichers (1) von einer in einem nichtflüchtigen Speicher enthaltenen Sperrdateninformation abhängt.

4. Verfahren nach einem der vorhergehenden Ansprüche,
**dadurch gekennzeichnet,** daß durch eine Sperrschaltung ein Verändern der Daten in dem Speicherbereich mit den zur Programmausführung zugelassenen Adressen unterbindbar ist.

5. Verfahren nach einem der vorhergehenden Ansprüche,
**dadurch gekennzeichnet,** daß ein Kontrollprogramm das Setzen der Blockiereinrichtung (4) in Abhängigkeit von den in einem nichtflüchtigen Speicher abgelegten Speicherdaten veranlaßt.

6. Verfahren nach Anspruch 5,
**dadurch gekennzeichnet,** daß erst nach dem erfolgreichen Ablauf dieses Kontrollprogrammes die Benutzung des Mikrocomputers ermöglicht wird.

**Claims**

1. Method of operating an electrically programmable memory (1) as a program memory of a microcomputer having a CPU (3) with instruction counter (3a), characterised in that the execution of programs stored in the electrically programmable memory (1) for a certain address area of the electrically programmable memory (1) can be blocked at any time for all subsequent applications by activating a blocking device (4) which blocks any output of the addresses of this address area by the instruction counter (3a) of the CPU (3).

2. Method according to Claim 1, characterised in that the execution of programs stored in the electrically programmable memory (1) for a freely selectable address area of the electrically programmable memory (1) can be blocked for all subsequent applications.

3. Method according to Claim 1 or 2, characterised in that the execution of programs stored in the electrically programmable memory (1) for certain address areas of the electrically programmable memory (1) depends on inhibiting data information obtained in a non-volatile memory.

4. Method according to one of the preceding claims, characterised in that any changing of the data in the memory area having the addresses authorised for program execution can be blocked by an inhibiting circuit.

5. Method according to one of the preceding claims, characterised in that a checking program causes the setting of the blocking device (4), dependent on memory data stored in a non-volatile memory.

6. Method according to Claim 5, characterised in that use of the microcomputer is only made possible after the successful run of this checking program.

**Revendications**

1. Procédé pour faire fonctionner une mémoire électriquement programmable (1) en tant que mémoire de programme d'un micro-ordinateur comportant une unité CPU (3) et un compteur d'instructions (3a),
caractérisé par le fait que l'exécution de programmes mémorisés dans la mémoire électriquement programmable (1) pour une zone déterminée d'adresses de la mémoire électriquement programmable (1) peut être interrompue à tout moment pour tous les cas ultérieurs d'utilisation, au moyen de l'activation d'un dispositif de blocage (4), qui interrompt une sortie des adresses de cette zone d'adresses par le compteur d'instructions (3a) de l'unité CPU (3).

2. Procédé suivant la revendication 1, caractérisé par le fait que l'exécution de programmes mémorisés dans la mémoire électriquement programmable (1) pour une zone d'adresses, pouvant être librement sélectionnée, de la mémoire électriquement programmable (1) peut être interrompue pour tous les cas ultérieurs d'utilisation.

3. Procédé suivant la revendication 1 ou 2, caractérisé par le fait que l'exécution de programmes mémorisés dans la mémoire électriquement programmable (1) pour des zones déterminées d'adresses de la mémoire électriquement programmable (1) dépend d'une information de données de blocage contenue dans une mémoire non volatile.

4. Procédé suivant l'une des revendications précédentes, caractérisé par le fait qu'une modification des données dans la zone de mémoire avec les adresses autorisées pour l'exécution du programme peut être interrompue par un circuit de blocage.

5. Procédé suivant l'une des revendications précédentes, caractérisé par le fait qu'un programme de contrôle déclenche le positionnement du dispositif de blocage (4) en fonction des données de mémoire mémorisées dans une mémoire non volatile.

6. Procédé suivant la revendication 5, caractérisé par le fait que l'utilisation du micro-ordinateur est possible uniquement après l'exécution réussie de ce programme de contrôle.